# EUROPEAN PATENT SPECIFICATION

(11) **EP 3 901 332 B1**
(45) Date of publication and mention of the grant of the patent: **05.06.2024**
(21) Application number: 19899207.5
(22) Date of filing: 18.12.2019
(51) Int. Cl.: C25D 3/56, C25D 5/36, C25D 5/00

(54) **ELECTROPLATED STEEL SHEET HAVING EXCELLENT SURFACE APPEARANCE, AND MANUFACTURING METHOD THEREFOR**
GALVANISIERTES STAHLBLECH MIT HERVORRAGENDEN OBERFLÄCHENEIGENSCHAFTEN UND VERFAHREN ZU SEINER HERSTELLUNG
TÔLE D'ACIER GALVANISÉE PRÉSENTANT UN EXCELLENT ASPECT DE SURFACE ET SON PROCÉDÉ DE FABRICATION

(30) Priority: 19.12.2018 KR 20180165595
(43) Date of publication of application: 27.10.2021
(73) Proprietor: POSCO Co., Ltd, Pohang-si, Gyeongsangbuk-do 37859 (KR)
(72) Inventor: KWON, Moon-Jae, Pohang-si, Gyeongsangbuk-do 37877 (KR); LEE, Jae-Yeong, Pohang-si, Gyeongsangbuk-do 37877 (KR); KIM, Su-Young, Pohang-si, Gyeongsangbuk-do 37877 (KR)
(74) Representative: Meissner Bolte Partnerschaft mbB
(86) International application number: PCT/KR2019/017931
(87) International publication number: WO 2020/130603

(56) References cited:
- WO-A1-2006/035527
- JP-A- S5 670 943
- KR-A- 20010 112 747
- KR-A- 20070 042 578
- KR-A- 20120 050 732
- KR-A- 20170 094 804
- KR-A- 20180 074 149
- KR-B1- 101 510 555

## Description

### [Technical Field]

The present invention relates to an electroplated steel sheet having an excellent surface appearance and a method of manufacturing the same, and more particularly, to a zinc-nickel alloy electroplated steel sheet having excellent surface appearance and image clarity, and a method of manufacturing the same.

### [Background Art]

In terms of a crystal structure, a pure Zn galvanized steel sheet exhibits an hexagonal close-packed crystal, whereas a zinc-nickel plated steel sheet exhibits a surface structure in a form of nodular grain.

In addition, the zinc-nickel plated steel sheet has very excellent corrosion resistance and high microhardness of the plating layer compared to a pure Zn galvanized steel sheet because nickel, which is an electrochemically stable and hard element, is added. Excellent corrosion resistance of a zinc-nickel-plated steel sheet is due to the fact that preferential dissolution of zinc proceeds during the initial stage of corrosion, forming zinc hydroxide corrosion products on a surface thereof, and forming a nickel enriched layer at the Zn-Ni/steel interface thereof, thereby suppressing an occurrence of red rust due to dissolution of base iron. An increase in microhardness due to an increase in a nickel content of the plating layer of the zinc-nickel plated steel sheet is not linear, but there may be a exponential increase in which a sharp increase occurs in the single gamma phase region.

Recently, a steel sheet with a surface appearance, similar to that of stainless steel, by using a carbon steel sheet to impart a hairline pattern to a surface of the steel sheet is in a spotlight in a field of materials for TV appliances. The hairline pattern steel sheet polished with the plating layer as described above has an advantage of realizing an equivalent or higher surface appearance at lower manufacturing costs compared to the existing stainless steel or vinyl coated metal.

In order to ensure a clear hairline pattern and excellent polishing efficiency during hairline processing of a plated steel sheet, the hardness of the plating layer should be high and corrosion resistance should be excellent. In the case of an Zn electro-galvanized steel sheet (EG) and a hot-dip galvanized steel sheet (GI), which are emerging as competitors for zinc-nickel-plated steel sheet, the hardness of the plating layer is 60-70 Hv, which is very low compared to zinc-nickel-plated steel sheet, such that there is a disadvantage in that the surface polishing efficiency and surface appearance after polishing are deteriorated.

In addition, Zn electro-galvanized steel sheets and hot-dip galvanized steel sheets are susceptible to white rust, so there is a disadvantage in that white rust-type corrosion products formed on a surface thereof during a process of transportation and storage of the steel sheet remain on the surface of the steel sheet even after polishing, thereby deteriorating surface quality, as well as deteriorating surface appearance due to rapid corrosion under the condition that an amount of remaining plating after polishing is small as compared to that before polishing.

After hairline processing of the zinc-nickel-plated steel sheets, various studies are being conducted to improve surface appearance such as image clarity and glossiness, but consideration of the correlation in consideration of changes in the physical properties of the plating layer before and after hairline processing is insufficient.

Document JPS5670943 discloses a zinc-nickel alloy electroplated steel sheet, comprising a base steel sheet and a zinc-nickel plating layer and having a hairline pattern formed thereon.

### [Disclosure]

### [Technical Problem]

The present disclosure has been devised in view of the above circumstances, and an aspect of the present disclosure is to provide a zinc-nickel alloy electroplated steel sheet having an attractive surface appearance after hairline processing, and excellent image clarity, and a method of manufacturing the same.

### [Technical Solution]

According to an aspect of the present disclosure, a zinc-nickel alloy electroplated steel sheet is provided. The zinc-nickel alloy electroplated steel sheet includes: a base steel; a zinc-nickel plating layer located on at least one surface of the base steel sheet, and having a hairline pattern formed thereon, wherein surface roughness of the base steel sheet forming an interface with the zinc-nickel plating layer is 0.7 to 1.0 µm on the basis of center line average roughness (Rₐ).

The zinc-nickel plating layer is formed of a single gamma (Ni₅Zn₂₁) phase.

The zinc-nickel plating layer may have hardness of 250 to 400 Hv.

According to another aspect of the present disclosure, a method of manufacturing a zinc-nickel alloy electroplated steel sheet is provided. The method of manufacturing a zinc-nickel alloy electroplated steel sheet includes operations of: skin-pass rolling a base steel sheet; immersing the skin-pass-rolled base steel sheet in a sulfuric acid bath including nickel sulfate hexahydrate (NiSO₄·6H₂O) and zinc sulfate heptahydrate (ZnSO₄·7H₂O) to form a zinc-nickel plating layer on the base steel sheet; and polishing the zinc-nickel plating layer and processing a hairline pattern.

The operation of skin-pass rolling may be performed using an electric discharge textured (EDT) roll in a capacity (-) mode.

Chrome may be coated on a surface of the roll.

The operation of skin-pass rolling may be performed at an elongation of 0.3 to 1.2%.

The surface roughness (Rₐ) of the skin-pass rolled steel sheet is 0.7 to 1.0 um.

The zinc-nickel plating layer formed on the base steel sheet is formed of a single gamma (Ni₅Zn₂₁) phase.

The hardness of the zinc-nickel plating layer formed on the base steel sheet may be 250 to 400 Hv.

After the polishing and hairline pattern processing, a change in the surface roughness (Rₐ) of the zinc-nickel plating layer may be -1.00 to -0.35 um.

A change rate of the surface roughness (Rₐ) of the zinc-nickel plating layer after the polishing may be 60 to 85%, and a change rate of the surface roughness (Rₐ) of the zinc-nickel plating layer after hairline pattern processing may be 15 to 40%.

A thickness of the plating layer after the polishing and hairline pattern processing may be 0.2 to 0.75 of the thickness of the plating layer before the polishing and hairline pattern processing.

### [Advantageous Effects]

According to the present disclosure, a zinc-nickel electroplated steel sheet, which not only has an attractive surface appearance after hairline processing, but also has excellent price competitiveness compared to existing stainless steel or vinyl laminated steel sheets, as well as high productivity in a coil polishing line, and a method of manufacturing the same are provided.

### [Brief Description Of Drawings]

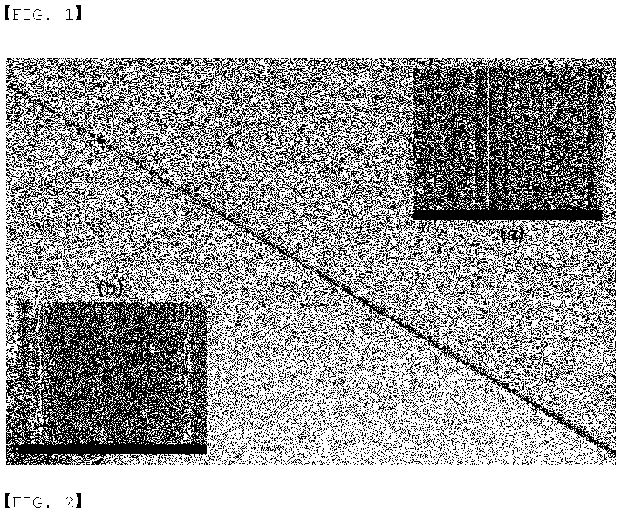

FIG. 1 illustrates a result of analyzing an image of a surface of a steel sheet after polishing and hairline processing according to the present invention at a magnification of 2,000 times using a scanning electron microscope (SEM), (a) in FIG. 1 illustrates an Example 1 and (b) in FIG. 1 illustrates Comparative Example 1.

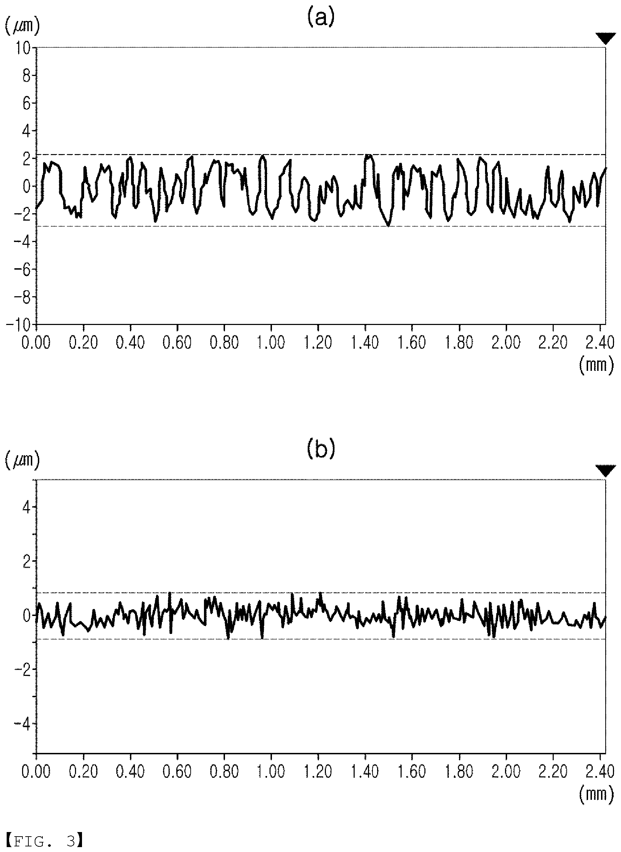

FIG. 2 illustrates a result of analyzing a surface roughness (Rₐ) profile in a transverse direction of the steel sheet before and after polishing and hairline processing according to Example 1 of the present invention, (a) in FIG. 2 illustrates a case before processing, and (b) FIG. 2 illustrates a case after processing.

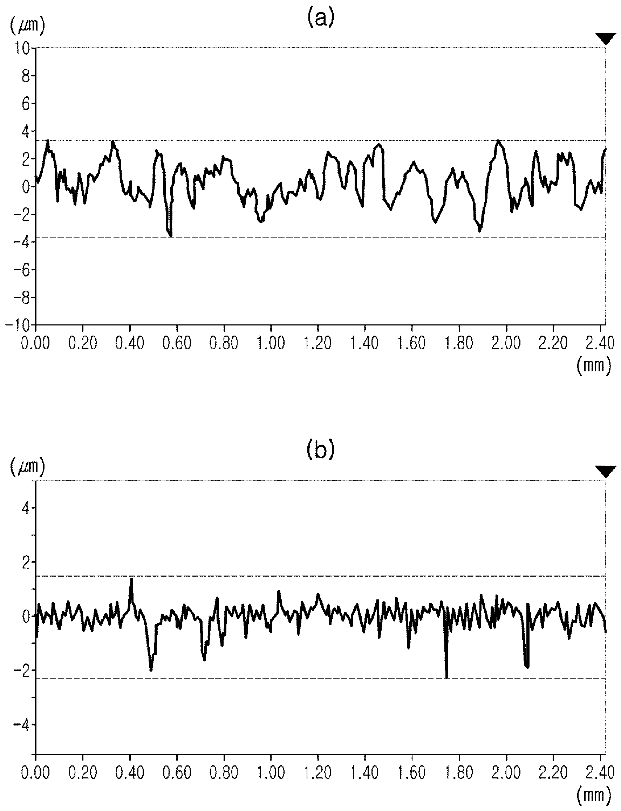

FIG. 3 illustrates a result of analyzing a surface roughness (Rₐ) profile in a transverse direction of the steel sheet before and after polishing and hairline processing according to Comparative Example 1 of the present invention, (a) FIG. 3 illustrates a case before processing, and (b) FIG. 3 illustrates a case after processing.

### [Best Mode for Invention]

Hereinafter, the present disclosure will be described in detail. However, embodiments of the present disclosure may be modified to have various other forms, and the scope of the present disclosure is not limited to the embodiments described below.

The present disclosure relates to an electroplated steel sheet having excellent surface appearance, and a method of manufacturing the same, and more particularly, to a zinc-nickel alloy electroplated steel sheet having excellent surface appearance and image clarity, and a method of manufacturing the same.

The zinc-nickel alloy electroplated steel sheet having a hairline pattern formed thereon is generally subjected to sequential processes of polishing, hairline patterning, brushing, surface cleaning, and hot air drying in a coil polishing line, and then a final product is completed through a painting treatment in a subsequent color coating line.

Among various studies to improve surface appearance such as image clarity, glossiness, and the like, after hairline processing of the zinc-nickel plated steel sheet, the inventors of the present invention have conducted various studies to confirm that hardness of the zinc-nickel plating layer and surface roughness of a raw material before polishing and hairline processing are main factors affecting the productivity of coil polishing and surface appearance including glossiness and image clarity, thereby completing the present disclosure.

According to an aspect of the present disclosure, a zinc-nickel alloy electroplated steel sheet includes: a base steel sheet; and a zinc-nickel plating layer located on at least one surface of the base steel sheet, and having a hairline pattern formed thereon, wherein surface roughness (Rₐ) of the base steel sheet is 0.7 to 1.0pm, forming an interface with the zinc-nickel plating layer.

The type of the base steel sheet is not particularly limited, and any one that can be used in the technical field to which the present disclosure belongs, such as a hot-rolled steel sheet and a cold-rolled steel sheet, may be used. However, in the present disclosure, since the base steel sheet determines surface roughness of the plated steel sheet by affecting electrodeposition properties of zinc or nickel particles during zinc-nickel electroplating, as described later, in a skin-pass rolling process determining final surface roughness of the base steel sheet, it is necessary to set a preferable roll processing method and surface roughness of the base steel sheet accordingly.

A zinc-nickel plating layer formed by an electroplating method may be formed on at least one surface of the base steel sheet, and a hairline pattern may be formed on the zinc-nickel plating layer.

The surface roughness (Rₐ) of the base steel sheet forming an interface with the zinc-nickel plating layer is 0.7 to 1.0 um. When the surface roughness (Rₐ) is less than 0.7 um, the surface roughness is uniform during plating, but there is a disadvantage in that plating adhesion is deteriorated. On the other hand, when the surface roughness (Rₐ) exceeds 1.0 um, a plated layer follows roughness profiles of the base steel sheet, so that the surface roughness increases, and thus, there is a disadvantage in that the surface appearance is deteriorated after hairline processing. However, it is more preferable that the surface roughness (Rₐ) of the base steel sheet is 0.7 to 0.9 um in consideration of securing an attractive appearance after hairline processing and an increase in surface roughness compared to the base steel sheet after zinc-nickel electroplating.

The zinc-nickel plating layer formed on the base steel sheet is formed of a single gamma (Ni₅Zn₂₁) phase. In the electroplating of zinc-based alloys, in order to ensure excellent corrosion resistance, a corrosion rate of zinc having high electrochemical reactivity (active) under a corrosive environment should be reduced, simultaneously sacrificial property should be maintained for long periods. In this respect, in the case of a single gamma phase, not only the gamma phase is electrochemically stable, but also excellent corrosion resistance can be achieved because there is no galvanic corrosion caused by a potential difference between crystal phases in a mixed phase such as eta + gamma. In addition, in the gamma single phase region, hardness of the plating layer is rapidly increased according to the increase in the nickel content in the plating layer, so that it is easy to obtain high hardness in the plating layer.

In particular, as will be described later, an acid bath applied to form a zinc-nickel plating layer on the base steel sheet in the present disclosure has a non-uniform distribution of nickel in a thickness direction compared to an alkali bath, and it exhibits an increasing distribution behavior that a nickel content gradually increases from a surface to an interface direction of the plating layer/base steel sheet, and as the nickel content in the plating layer increases, a nickel depletion region in a surface region decreases. Thereby, it is possible to achieve a substantially high hardness of the plating layer in the surface region in which hairline polishing is performed, and thus an excellent surface appearance.

In addition, it is preferable that hardness of the zinc-nickel plating layer formed on the base steel sheet of the present disclosure is 250 to 400. If the hardness of the zinc-nickel plating layer is less than 250Hv, a part of the plating layers are torn off during hairline pattern processing, inhibiting securing a uniform hairline pattern in a rolling direction, and increasing roll force on a material, causing a problem in that fine craters are generated on the surface during operation.

It can be said that the higher the hardness of the plating layer is, the easier it is to polish the surface and the higher the efficiency. However, when the hardness of the zinc-nickel plating layer exceeds 400 Hv, additional improvement in the ease of surface polishing is insignificant, while residual stress of the zinc-nickel plating layer increases due to the increase in the nickel content, which is relatively expensive compared to zinc in the plating layer, resulting in fine cracks on the surface and poor price competitiveness, which is not preferable.

According to another aspect of the present disclosure, a method of manufacturing a zinc-nickel alloy electroplated steel sheet includes operations of: skin-pass rolling a base steel sheet; immersing the skin-pass-rolled base steel sheet in a sulfuric acid bath including nickel sulfate hexahydrate and zinc sulfate heptahydrate to form a zinc-nickel plating layer on the base steel sheet; and polishing the zinc-nickel plating layer and processing a hairline pattern.

First, a base steel sheet is prepared. The base steel sheet may secure surface cleanliness through a pretreatment process such as degreasing or pickling, and pretreatment conditions are not particularly limited in the present disclosure.

The base steel sheet affects electrodeposition properties of zinc or nickel ions during zinc-nickel electroplating to determine surface roughness of the plated steel sheet, such that in a skin-pass rolling process determining final surface roughness of the base steel sheet, it is necessary to set a preferable roll processing method and the surface roughness of the base steel sheet accordingly.

Accordingly, it is preferable that the operation of skin-pass rolling of the base steel sheet is performed using an electric discharge textured roll in a capacity (-) mode. In a processing method using a skin-pass roll, shot blast texturing is a physical method of imparting roughness by projecting metal grit onto a surface of the roll, whereas electric discharge processing is an electrical method of imparting roughness by removing particles on a surface of a roll with an electrical spark between the roll and the electrode in an insulating solution. Accordingly, the roll manufactured through the electric discharge processing method has an advantage that roughness uniformity is improved compared to the roll manufactured through the shot blast texturing, so that the roughness variation is reduced and the image clarity is excellent.

In addition, even in an electric discharge processing mode, capacity (+) and impulse (-) modes have inferior illuminance reproducibility as compared to other modes during operation, and the impulse (+) mode has excellent workability, but the number of peaks of roughness per unit length is the highest, so there is a disadvantage of inhibiting uniform electrodeposition during electroplating. Therefore, it is preferable that to skin-pass roll the base steel sheet using an electric discharge processing roll in the capacity (-) mode.

In this case, it is more preferable to coat a surface of the roll with chromium in order to extend a service life of the roll, flatten roughness of the roll over an elapse of working time, and reduce a variation in surface roughness between the working materials.

Meanwhile, in consideration of the surface roughness and strength of the steel sheet, the operation of skin-pass rolling is preferably performed at an elongation of 0.3 to 1.2%. More specifically, when the elongation during skin-pass rolling is less than 0.3%, an effect of adjusting the surface roughness of the base steel sheet is insufficient due to a decrease in a transfer rate. On the other hand, if the elongation during skin-pass rolling exceeds 1.2%, the surface roughness of the base steel sheet increases, and at the same time, work hardening occurs due to dislocation growth, and accordingly, yield strength increases, and there is a problem in that cracks occur during press forming of the final product.

As described above, the surface roughness of the skin-pass-rolled steel sheet is 0.7 to 1.0 um on the basis of a center line average roughness (Rₐ). If the surface roughness is less than 0.7 um, the surface roughness is uniform during plating, but there is a disadvantage in that plating adhesion is deteriorated. On the other hand, when the surface roughness exceeds 1.0 um, the surface roughness increases as a plated layer follows roughness profiles of the base steel sheet, and as a result, there is a disadvantage in that the surface appearance may be deteriorated after hairline processing. However, it is more preferable that the surface roughness of the base steel sheet is 0.7 to 0.9 um in consideration of securing an attractive surface appearance and an increase in the surface roughness compared to the base steel sheet after the hairline processing after zinc-nickel electroplating.

The skin-pass-rolled base steel sheet is immersed in sulfuric acid bath containing nickel sulfate hydrate and zinc sulfate hydrate to form a zinc-nickel plating layer on the base steel sheet. A method of forming the zinc-nickel plating layer is not particularly limited, but for example, after placing a base steel sheet on a cathode of an electroplating simulator having a vertical plating cell-type, circulating a sulfuric acid bath plating solution to form a zinc-nickel plating layer on one surface, and a method of forming a zinc-nickel plating layer is formed the other surface thereof in the same manner as described above may be used.

The sulfuric acid bath is preferably an acidic bath having a pH of 0.5 to 3.5. In general, acidic bath have high current efficiency due to high electrical conductivity compared to alkali baths, and exhibit non-uniform distribution of alloying elements along the thickness direction in a normal current density range. That is, the zinc-nickel alloy electroplated steel sheet manufactured under acidic bath conditions exhibits a distribution in which a nickel content increases from a base steel sheet on a surface of the plating layer to an interface of the zinc-nickel plating layer.

In the zinc-nickel alloy electroplated steel sheet, a nickel-enriched layer is formed during corrosion, which can suppress further corrosion. In the case of an acidic bath, a nickel concentration at the interface between the base steel sheet and the plating layer is relatively high, so the nickel-enriched layer, which is a corrosion resistance enhancing mechanism of the zinc-nickel plated steel sheet, is strengthened, thereby contributing to securing stable corrosion resistance even after polishing and hairline patterning.

In addition, since a dissolution rate of nickel sulfate or nickel carbonate, which is a source of nickel ion in a plating bath, is fast under acidic bath conditions, in terms of commercial production, an acidic bath is more advantageous than an alkali bath in order to surface defects such as dents, or the like, caused by undissolved particles when the raw material for nickel supplementation is added.

The sulfuric acid bath is preferably included in an amount of 40 to 60 g/L of nickel sulfate hexahydrate and 60 to 90 g/L of zinc sulfate heptahydrate. When the nickel sulfate hexahydrate is less than 40 g/L and the zinc sulfate heptahydrate exceeds 90 g/L, the hardness of the zinc-nickel plating layer to be formed may be less than 250 Hv, and accordingly, there is a problem in that a part of the plating layers are torn off during hairline pattern processing, inhibiting securing a uniform hairline pattern in a rolling direction, and increasing roll force on the material, thereby generating fine craters on a surface during operations.

On the other hand, when the nickel sulfate hexahydrate exceeds 60 g/L and the zinc sulfate heptahydrate is less than 60 g/L, the hardness of the formed zinc-nickel plating layer may exceed 400 Hv, and accordingly, additional improvement in the ease of surface polishing is insignificant, while additional improvement in the ease of surface polishing is insignificant, a residual stress of the zinc-nickel plating layer increases due to an increase in the nickel content, which is relatively expensive compared to zinc in the plating layer, resulting in fine cracks on the surface and low price competitiveness, which is not preferable.

It is preferable that the hardness of the zinc-nickel plating layer formed as described above is 250 to 400. When the hardness of the zinc-nickel plating layer is less than 250Hv, a part of the plating layers are torn off during hairline pattern processing, there is a problem in that a part of the plating layers are torn off during hairline pattern processing, inhibiting securing a uniform hairline pattern in a rolling direction, and increasing roll force on the material, thereby generating fine craters on a surface during operations.

It can be said that the higher the hardness of the plating layer, the easier it is to polish the surface and the higher the efficiency. However, when the hardness of zinc-nickel plating layer exceeds 400 Hv, while the additional improvement in the ease of surface polishing is insignificant, the residual stress of the zinc-nickel plating layer increases due to an increase in the nickel content, which is relatively expensive compared to zinc in the plating layer, which leads to microcracks in the surface and lowers price competitiveness, which is not preferable.

In addition, the zinc-nickel plating layer is composed of a single gamma (Ni₅Zn₂₁) phase. In electroplating of zinc-based alloy, in order to ensure excellent corrosion resistance, a corrosion rate of zinc having high electrochemical reactivity (active) under a corrosive environment should be reduced, but sacrificial property should be maintained for a long period of time.

In this respect, in the case of a single gamma phase, not only is the gamma phase electrochemically stable, but also excellent corrosion resistance can be secured because there is no galvanic corrosion caused by a potential difference between crystal phases in a mixed phase such as eta + gamma.

In addition, in a gamma single-phase region, the hardness of the plating layer is rapidly increased because of the increase in the nickel content in the plating layer, so that it is easy to secure high hardness in the plating layer.

Next, an operation of polishing the zinc-nickel plating layer and processing the hairline pattern are performed. The polishing and hairline pattern processing may be performed using a commonly used polishing belt method, but is not limited thereto.

Polishing serves to determine a plating amount to be polished, that is, the plating amount remaining after processing, flattening a material before hairline processing to increase glossiness of a material after processing the hairline, and adjusting a degree of applied roll force. In addition, hairline processing serves to impart a pattern of hairline patterns to the surface of the zinc-nickel plated steel sheet flattened through polishing.

More specifically, it is preferable that a rotational speed of a polishing belt is faster than that of a hairline polishing belt, and the surface roughness of the polishing belt is larger than that of the hairline polishing belt in terms of removing the surface plating layer and securing a flattening effect.

Accordingly, when an entire change value of the surface roughness after processing compared to before polishing and hairline processing is 100%, it is preferable that a contribution rate of the change in surface roughness of polishing is 60 to 85%, and a contribution rate of the change in surface roughness of the hairline pattern processing is 15 to 40%.

When the contribution rate of the change in surface roughness of polishing is less than 60%, a degree of roughness flattening is insufficient, making it difficult to secure an attractive surface appearance after processing, and when the contribution rate exceeds 85%, a loss of the plating layer is excessive, resulting in an insufficient remaining plating amount and, at the same time, damages such as a crater shape may occur in the surface of the plating layer.

Meanwhile, when the contribution rate of the change in the surface roughness of the hairline pattern processing is less than 15%, the hairline pattern on the surface of the steel sheet is not easily recognized by the naked eye, and when it exceeds 40%, there is a problem that the surface appearance is deteriorated due to the unevenness of the hairline pattern profile.

The change value of surface roughness after processing compared to before polishing and hairline processing can be derived through the following calculation formula. Contribution rate to change in polishing surface roughness = (Ra before processing-Ra after polishing) * 100/(Ra before processing-Ra after processing) Contribution rate to change in hairline surface roughness = (Ra after polishing-Ra after hairline) * 100/(Ra before processing-Ra after processing)

Meanwhile, after the polishing and hairline pattern processing, it is preferable that the change in center line average roughness (Rₐ) of the zinc-nickel plating layer is - 1.00 to -0.35pm. If it is less than -1.00pm, there is a problem that fine cracks or craters are generated in the plating layer due to an increase in the roll force for flattening the surface. On the other hand, when it exceeds -0.35µm, there is a problem that a surface flattening effect is insufficient or a depth of the peaks and valleys increases on a roughness profile in a transverse direction of the rolling, such that there is a problem in that surface quality is deteriorated. Furthermore, it is preferable that the roughness profile in the transverse direction of rolling of the material before and after processing is a regular and uniform sine curve.

It is preferable that the thickness of the plating layer after polishing and hairline pattern processing is 0.2 to 0.75 of the thickness of the plating layer before polishing and hairline pattern processing. That is, it is preferable that a ratio of the thickness of the plating layer after polishing and hairline pattern processing to the thickness of the plating layer before polishing and hairline pattern processing is 0.2 to 0.75. When it is less than 0.2, a plating thickness of a raw material before polishing and hairline processing is thick, or a plating thickness of a processed material is thin, which increases manufacturing costs and increases the plating amount to be removed through polishing, such that there is a problem in that corrosion resistance of the processed material is deteriorated in addition to increasing the load during coil polishing.

On the other hand, when it exceeds 0.75, there is a disadvantage that it is difficult to secure an attractive surface appearance because the polishing effect is insignificant.

The zinc-nickel electroplated steel sheet of the present disclosure as described above has excellent glossiness and image clarity after polishing and hairline pattern processing, and not only has an excellent price competitiveness compared to stainless steel or vinyl laminated steel sheet in realizing the surface appearance of the hairline pattern, but also may secure high productivity through high-speed operation in a coil polishing line.

### [Mode for Invention]

### Example

Hereinafter, the present disclosure will be described more specifically with reference to specific examples. The following examples are provided to aid in an understanding of the present disclosure, and the scope of the present disclosure is not limited thereto.

Using a skin-pass rolling tester, a base steel plate (ultra low-carbon steel) having a size of 0.6 mm, a width of 140 mm, and a length of 250 mm with different surface roughness was prepared by controlling a processing method, a processing mode, and elongation of a skin-pass rolling.

Thereafter, after degreasing and pickling, zinc sulfate heptahydrate and nickel sulfate hexahydrate were added to form a zinc-nickel plating layer on the base steel sheet through electroplating. In this case, after placing the base steel sheet on a cathode of a vertical plating cell-type electroplating simulator, circulating a plating solution to form a zinc-nickel plating layer on one surface, and then a zinc-nickel plating layer was formed on the other surface, to control a plating amount on both surfaces of the base steel sheet.

When the plating layer was formed, a plating bath pH was 1.5 to 2.5, a current density was 100 A/dm², and a flow rate was 1.5 m/s. The amount of sodium sulfate added to plating solution to adjust conductivity was 30 g/L. Thereafter, a zinc-nickel plated steel sheet a hairline pattern was manufactured by passing the base steel sheet on which the zinc-nickel plating layer was formed through a polishing and hairline processing apparatus. In this case, a polishing belt for each of the polishing and hairline used 120-180 grit and 240-320 grit. The manufacturing conditions of each specimen were summarized and shown in Tables 1 and 2 below.

**[Table 1]**

| Classif ication | skin-pass rolling | | | | Zinc-nickel electroplating | | | | |
|---|---|---|---|---|---|---|---|---|---|
| | Roll process! ng method | Electric discharg e machinin g mode | Elonga tion (%) | Roughn ess (Ra, µm) | Zinc sulfate heptahy drate (g/L) | Nickel sulfate hexahyd rate (g/L) | Platin g time(s ec.) | Hardne ss (Hv) | Crysta l phase |
| Example 1 | Electric discharg e machinin 9 | Capacity (-) | 0.7 | 0.9 | 50.0 | 68.0 | 10.0 | 320 | Gamma single phase |
| Example 2 | Electric discharg e machinin 9 | Capacity (-) | 0.4 | 1.0 | 50.0 | 68.0 | 10.0 | 320 | Gamma single phase |
| Example 3 | Electric discharg e machinin 9 | Capacity (-) | 1.1 | 0.8 | 50.0 | 68.0 | 10.0 | 320 | Gamma single phase |
| Compara tive Example 1 | Shot blast | - | 0.7 | 1.3 | 50.0 | 68.0 | 10.0 | 320 | Gamma single phase |
| Compara tive Example 2 | Electric discharg e machinin 9 | Impulse ( +) | 0.7 | 0.9 | 50.0 | 68.0 | 10.0 | 320 | Gamma single phase |
| Compara tive Example 3 | Electric discharg e machinin 9 | Capacity (-) | 0.15 | 1.2 | 50.0 | 68.0 | 10.0 | 320 | Gamma single phase |
| Compara tive Example 4 | Electric discharg e machinin 9 | Capacity (-) | 1.4 | 1.5 | 50.0 | 68.0 | 10.0 | 320 | Gamma single phase |
| Compara tive Example 5 | Electric discharg e machinin 9 | Capacity (-) | 1.8 | 1.9 | 50.0 | 68.0 | 10.0 | 320 | Gamma single phase |
| Compara tive Example 6 | Electric discharg e machinin 9 | Capacity (-) | 0.7 | 0.9 | 64.5 | 43.0 | 10.0 | 215 | Eta+ga mma phase |
| Compara tive Example 7 | Electric discharg e machinin 9 | Capacity (-) | 0.7 | 0.9 | 61.5 | 48.5 | 10.0 | 240 | Eta+ga mma phase |
| Compara tive Example 8 | Electric discharg e machinin 9 | Capacity (-) | 0.7 | 0.9 | 39.0 | 92.5 | 10.0 | 420 | Gamma single phase |
| Compara tive Example 9 | Electric discharg e machinin 9 | Capacity (-) | 0.7 | 0.9 | 35.0 | 100.0 | 10.0 | 445 | Gamma single phase |
| Compara tive Example 10 | Electric discharg e machinin 9 | Capacity (-) | 0.7 | 0.9 | 50.0 | 68.0 | 7.5 | 320 | Gamma single phase |
| Compara tive Example 11 | Electric discharg e machinin 9 | Capacity (-) | 0.7 | 0.9 | 50.0 | 68.0 | 5.8 | 320 | Gamma single phase |
| Compara tive Example 12 | Electric discharg e machinin 9 | Capacity (-) | 0.7 | 0.9 | 50.0 | 68.0 | 22.0 | 320 | Gamma single phase |
| Compara tive Example 13 | Electric discharg e machinin 9 | Capacity (-) | 1.4 | 1.5 | 50.0 | 68.0 | 10.0 | 320 | Gamma single phase |
| Example 4 | Electric discharg e machinin 9 | Capacity (-) | 0.7 | 0.9 | 50.0 | 68.0 | 10.0 | 320 | Gamma single phase |
| Example 5 | Electric discharg e machinin 9 | Capacity (-) | 0.7 | 0.9 | 50.0 | 68.0 | 10.0 | 320 | Gamma single phase |
| Compara tive Example 14 | Electric discharg e machinin 9 | Capacity (-) | 0.7 | 0.9 | 50.0 | 68.0 | 10.0 | 320 | Gamma single phase |
| Compara tive Example 15 | Electric discharg e machinin 9 | Capacity (-) | 0.7 | 0.9 | 50.0 | 68.0 | 10.0 | 320 | Gamma single phase |
| Compara tive Example 16 | Electric discharg e machinin 9 | Capacity (-) | 0.7 | 0.9 | 50.0 | 68.0 | 10.0 | 320 | Gamma single phase |

**[Table 2]**

| Classifi cation | Polishing | Hairline polishing | Polishing! hairline processing | |
|---|---|---|---|---|
| | Contributio n rate to surface roughness change (%) | Contribution rate to surface roughness change (%) | Change in surface roughness before and after processing (Ra, µm) | Relative ratio of plating thickness before and after processing |
| Example 1 | 80 | 20 | -0.70 | 0.50 |
| Example 2 | 80 | 20 | -0.55 | 0.45 |
| Example 3 | 80 | 20 | -0.75 | 0.50 |
| Comparat ive Example 1 | 85 | 15 | -0.90 | 0.45 |
| Comparat ive Example 2 | 80 | 20 | -0.60 | 0.45 |
| Comparat ive Example 3 | 80 | 20 | -0.60 | 0.60 |
| Comparat ive Example 4 | 80 | 20 | -0.90 | 0.55 |
| Comparat ive Example 5 | 80 | 20 | -0.40 | 0.55 |
| Comparat ive Example 6 | 80 | 20 | -0.25 | 0.50 |
| Comparat ive Example 7 | 80 | 20 | -0.30 | 0.50 |
| Comparat ive Example 8 | 80 | 20 | -0.95 | 0.50 |
| Comparat ive Example 9 | 80 | 20 | -0.95 | 0.50 |
| Comparat ive Example 10 | 80 | 20 | -0.60 | 0.80 |
| Comparat ive Example 11 | 80 | 20 | -0.60 | 1.00 |
| Comparat ive Example 12 | 80 | 20 | -0.60 | 0.15 |
| Comparat ive Example 13 | 85 | 15 | -1.05 | 0.45 |
| Example 4 | 60 | 40 | -0.50 | 0.60 |
| Example 5 | 70 | 30 | -0.65 | 0.50 |
| Comparat ive Example 14 | 40 | 60 | -0.20 | 0.75 |
| Comparat ive Example 15 | 50 | 50 | -0.25 | 0.80 |
| Comparat ive Example 16 | 90 | 10 | -1.20 | 0.10 |

By analyzing microhardness of the plating layer and a crystal phase of the zinc-nickel plated steel sheet prepared as described above, physical properties of the steel sheet exerted on the surface appearance when forming the hairline pattern were confirmed in advance.

The hardness of the plating layer was measured by applying a load of 5gf with an ultra-micro hardness meter (Simadzu, DUH-W201S). Meanwhile, the crystal phase of the plating layer was analyzed by JCPDS after irradiating the specimen with an acceleration voltage of 40 kV using Cu Kα radiation with an X-ray diffraction analyzer (Rigaku, D/MAX 2500V/PC).

In addition, in order to determine an effect of yield strength of the steel sheet according to the skin-pass-rolling elongation, for some specimens, after being processed with KS 13B, yield strength was evaluated with an Instron tensile tester at 10 MPa/s until a yield point, and a strain rate of 0.007 s⁻¹ above the yielding point.

For the zinc-nickel plated steel sheet prepared as described above and a polishing and hairline treatment material, a plating layer was dissolved in a dilute solution of hydrochloric acid, and a difference in weight before and after was analyzed to confirm a change in a plating amount.

In addition, a surface morphology of the specimen was analyzed with a JEOL JSM-7001F field emission scanning electron microscope (FE-SEM) for some finished materials of polishing and hairline processing, and a cause of the difference in surface appearance such as image clarity, or the like, was analyzed.

Furthermore, for a base steel sheet before plating, a zinc-nickel plated steel sheet, and a hairline processed material by polishing alone and after polishing prepared as described above, a change in surface roughness of the steel sheet according to a process was confirmed by measuring roughness in 2.4mm horizontal and 1.8mm vertical regions with a Vecco Instruments' three dimensional (3D) non-contact roughness measuring device.

In addition to analysis items for each step of the process, corrosion resistance, image clarity and press formability were measured, and a result thereof is provided in Table 3 below, and a method for evaluating corrosion resistance, image clarity and press formability is as follows.

### 1. Corrosion resistance

Corrosion resistance (a red rust generation fraction) was determined by cutting a specimen into a size of 75 × 150 mm, masking an edge with a Teflon tape (Nitto Denko Corp. NITOFLON, No.903UL), and put the specimen into salt spray tester STP-200 (SUGA Test Instruments, Japan) and left in accordance with JIS (Japan Industrial Standards) Z 2371 (5% of sodium chloride, 1-2ml of spray volume per hour, and a chamber temperature of 35°C). When a result thereof was 0 to 10%, it was evaluated as excellent, when a result thereof exceeded 10% to 40%, it was evaluated as good, when a result thereof exceeded 40% to 70%, it was evaluated as normal, and when a result thereof exceeded 70%, it was evaluated as insufficient.

### 2. Image clarity

Image clarity was obtained by measuring a distinctness of image (DOI) value by placing a Rhopint Instruments image clarity measurer on a final specimen, which was polished and hairline processed. If the DOI value exceeded than 30, it was evaluated as very good, if it exceeds 20 to 30, it was evaluated as good, if it was 10 to 20, it was evaluated as normal, and if it was less than 10, it was evaluated as insufficient.

### 3. Press formability

For a final material coated with some specimens of hairline and polishing processing finished material, press formability was confirmed by applying MVP 840TW water-insoluble plastic working oil of VS & Ein Chemical Co., Ltd., and then applying a load of 13 tons with a SIMPAC (SIMPAC) 250 ton servo press (SV1P-250), in pressing. An occurrence rate of damage to a coating film was derived by dividing a length of occurrence of film peeling on the side of a bead portion or a drawing portion by the total circumference. In this case, even if peeling occurred in either of the bead portion and the drawing portion, it was determined as peeling of the coating film.

As the evaluation method, when the occurrence rate of damage to the coating film was less than 10%, it was evaluated as excellent, when it was 10 to 20%, it was evaluated as normal, and when it exceeded 20%, it was evaluated as insufficient.

**[Table 3]**

| Classific ation | Yield strength (Mpa, material before processing) | Corrosion resistance | Image clarity | Press formability |
|---|---|---|---|---|
| Example 1 | 166 | Very good | Very good | Excellent |
| Example 2 | 162 | Very good | Very good | Good |
| Example 3 | 175 | Very good | Very good | Good |
| Example 1 | - | Good | Normal | - |
| Comparati ve Example 2 | - | Good | Excellent | - |
| Comparati ve Example 3 | 155 | Good | Good | Good |
| Comparati ve Example 4 | 187 | Normal | Insufficient | Normal |
| Comparati ve Example 5 | 205 | Normal | Insufficient | Insufficient |
| Comparati ve Example 6 | - | Normal | Good | - |
| Comparati ve Example 7 | - | Normal | Good | - |
| Comparati ve Example 8 | - | Normal | Good | - |
| Comparati ve Example 9 | - | Normal | Good | - |
| Comparati ve Example 10 | - | Normal | Good | - |
| Comparati ve Example 11 | - | Sufficient | Good | - |
| Comparati ve Example 12 | - | Sufficient | Good | - |
| Comparati ve Example 13 | - | Normal | Insufficient | - |
| Example 4 | 165 | Very good | Very good | Good |
| Example 5 | 167 | Very good | Very good | Good |
| Comparati ve Example 14 | - | Good | Normal | - |
| Comparati ve Example 15 | - | Good | Good | - |
| Comparati ve Example 16 | - | Insufficient | Normal | - |

Referring to Tables 1 to 3, it can be seen that Examples 1 to 5 satisfying the conditions proposed by the present disclosure have excellent corrosion resistance, image clarity, and press formability. However, in Comparative Examples 1 to 16, it can be confirmed that corrosion resistance, image clarity, and press workability were not secured as the conditions for skin-pass rolling, zinc-nickel electroplating, polishing and hairline polishing were not satisfied.

Specifically, in the case of Comparative Examples 1 to 5 and 13, as the skin-pass rolling conditions proposed by the present disclosure, roll texturing method and processing mode, skin-pass rolling elongation and corresponding steel sheet roughness were not satisfied, it can be confirmed that corrosion resistance, image clarity, and press workability may not be secured to an excellent level simultaneously. In particular, when skin-pass rolling elongation increases, yield strength of the steel sheet also increases, since a zinc-nickel plating layer has a very high hardness compared to that of a plating layer having a general pure zinc composition, and the plating layer limits deformation of the base steel sheet, it can be seen that it is important to manage the skin-pass rolling elongation at an appropriate level in that it can be a major factor in deteriorating formability of a final product.

In the case of Comparative Examples 6 to 12, it can be seen that excellent level of corrosion resistance and image clarity are not secured at the same time due to not satisfying the zinc-nickel electroplated conditions proposed by the present disclosure (an amount of zinc sulfate and nickel sulfate hydrate, plating time (plating amount), plating layer hardness, crystal phase).

In addition, in the case of Comparative Examples 14 to 16, as a contribute rate of a change in surface roughness in each of the polishing and hairline polishing process does not satisfy the conditions proposed by the present disclosure, it can be confirmed that corrosion resistance and image clarity could not be secured at the same time.

Meanwhile, FIG. 1 illustrates an image of a surface of a steel sheet in which polishing and hairline processing according to the present disclosure are completed, and a result of analyzing it at a magnification of 2,000 times using a scanning electron microscope (SEM), and (a) in FIG. 1 illustrates Example 1 and (b) in FIG. 1 illustrates Comparative Example 1. Referring to FIG. 1, it can be seen that a steel sheet manufactured according to Example 1 has a distinct hairline pattern on a surface and microstructure thereof in a rolling direction, so that surface quality is excellent, whereas in the case of Comparative Example 1, the hairline pattern on the surface and microstructure thereof is not distinct, so that surface quality is not excellent.

FIG. 2 illustrates a result of analyzing a roughness profile in a rolling transverse direction the steel sheet before and after polishing and hairline processing according to Example 1 of the present disclosure, (a) in FIG. 2 illustrates a state before processing, (b) in FIG. 2 illustrates a state after processing, and FIG. 3 illustrates a result of analyzing a roughness profile in a vertical direction of rolling of the steel sheet before and after polishing and hairline processing according to Comparative Example 1 of the present disclosure, and (a) in FIG. 3 illustrates a state before processing, (b) in FIG. 3 illustrates a state after processing.

Referring to FIGS. 2 and 3, it can be seen that in the steel sheet manufactured according to Example 1, a material before and after processing has a small depth of peaks and valleys and has a regular and uniform curve shape. On the other hand, in the case of the steel sheet manufactured according to Comparative Example 1, it can be seen that not only the depth of the peaks and valleys is relatively large, but also a period of the curve is irregular.

While example embodiments have been shown and described above, it will be apparent to those skilled in the art that modifications and variations could be made without departing from the scope of the present inventive concept as defined by the appended claims.

## Claims

1. A zinc-nickel alloy electroplated steel sheet, comprising:
a base steel sheet; and
a zinc-nickel plating layer located on at least one surface of the base steel sheet,
and having a hairline pattern formed thereon,
wherein surface roughness Rₐ of the base steel sheet forming an interface with the zinc-nickel plating layer is 0.7 to 1.0 µm on the basis of center line average roughness,
wherein the zinc-nickel plating layer is composed of a single gamma phase, which is Ni₅Zn₂₁.

2. The zinc-nickel alloy electroplated steel sheet of claim 1, wherein hardness of the zinc-nickel plating layer is 250 to 400 Hv.

3. A method of manufacturing a zinc-nickel alloy electroplated steel sheet,
comprising operations of:
skin-pass rolling a base steel sheet;
immersing the skin-pass-rolled base steel sheet in a sulfuric acid bath including nickel sulfate hexahydrate and zinc sulfate heptahydrate to form a zinc-nickel plating layer on the base steel sheet; and
polishing the zinc-nickel plating layer and processing a hairline pattern,
wherein surface roughness Rₐ of the skin-pass-rolled base steel sheet is 0.7 to 1.0 µm on the basis of center line average roughness,
wherein the zinc-nickel plating layer is composed of a single gamma phase, which is Ni₅Zn₂₁.

4. The method of manufacturing a zinc-nickel alloy electroplated steel sheet of claim 3, wherein the operation of skin-pass rolling is performed using an electric discharge textured roll in a capacity (-) mode.

5. The method of manufacturing a zinc-nickel alloy electroplated steel sheet of claim 4, wherein a surface of the roll is coated with chrome.

6. The method of manufacturing a zinc-nickel alloy electroplated steel sheet of claim 3, wherein the operation of skin-pass rolling is performed at an elongation of 0.3 to 1.2%.

7. The method of manufacturing a zinc-nickel alloy electroplated steel sheet of claim 3, wherein hardness of the zinc-nickel plating layer formed on the base steel sheet is 250 to 400 Hv.

8. The method of manufacturing a zinc-nickel alloy electroplated steel sheet of claim 3, wherein a change in surface roughness Ra of the zinc-nickel plating layer after the polishing and hairline pattern processing is -1.00 to -0.35 µm.

9. The method of manufacturing a zinc-nickel alloy electroplated steel sheet of claim 3, wherein a change rate of the surface roughness Ra of the zinc-nickel plating layer after the polishing is 60 to 85%, and a change rate of the surface roughness of the zinc-nickel plating after the hairline pattern processing is 15 to 40%.

10. The method of manufacturing a zinc-nickel alloy electroplated steel sheet of claim 3, wherein a thickness of the plating layer after the polishing and hairline pattern processing is 0.2 to 0.75 of the thickness of the plating layer before the polishing and hairline pattern processing.

## Patentansprüche

1. Galvanisiertes Stahlblech aus einer Zink-Nickel-Legierung, umfassend:
ein Basisstahlblech; und
eine Zink-Nickel-Galvanisierungsschicht, die sich auf mindestens einer Fläche des Basisstahlblechs befindet und ein darauf gebildetes Haarlinienmuster aufweist,
wobei die Oberflächenrauheit Rₐ des Basisstahlblechs, das eine Grenzfläche mit der Zink-Nickel-Galvanisierungsschicht bildet, 0,7 bis 1,0 µm auf Grundlage des arithmetischen Mittenrauwerts beträgt,
wobei die Zink-Nickel-Galvanisierungsschicht aus einer einzelnen Gamma-Phase besteht, bei der es sich um Ni₅Zn₂₁ handelt.

2. Galvanisiertes Stahlblech aus einer Zink-Nickel-Legierung nach Anspruch 1, wobei die Härte der Zink-Nickel-Galvanisierungsschicht 250 bis 400 Hv beträgt.

3. Verfahren zum Herstellen eines galvanisierten Stahlblechs aus einer Zink-Nickel-Legierung, umfassend die folgenden Schritte:
Dressieren eines Basisstahlblechs;
Eintauchen des dressierten Basisstahlblechs in ein Schwefelsäurebad, das Nickelsulfat-Hexahydrat und Zinksulfat-Heptahydrat beinhaltet, um eine Zink-Nickel-Galvanisierungsschicht auf dem Basisstahlblech zu bilden; und
Polieren der Zink-Nickel-Galvanisierungsschicht und Bearbeiten mit einem Haarlinienmuster, wobei die Oberflächenrauheit Rₐ des dressierten Basisstahlblechs 0,7 bis 1,0 µm auf Grundlage des arithmetischen Mittenrauwerts beträgt,
wobei die Zink-Nickel-Galvanisierungsschicht aus einer einzelnen Gamma-Phase besteht, bei der es sich um Ni₅Zn₂₁ handelt.

4. Verfahren zum Herstellen eines galvanisierten Stahlblechs aus einer Zink-Nickel-Legierung nach Anspruch 3, wobei der Vorgang des Dressierens unter Verwendung einer durch Funkenerosion texturierten Walze in einem Modus Kapazität (-) durchgeführt wird.

5. Verfahren zum Herstellen eines galvanisierten Stahlblechs aus einer Zink-Nickel-Legierung nach Anspruch 4, wobei eine Oberfläche der Walze mit Chrom beschichtet ist.

6. Verfahren zum Herstellen eines galvanisierten Stahlblechs aus einer Zink-Nickel-Legierung nach Anspruch 3, wobei der Vorgang des Dressierens bei einer Längenänderung von 0,3 bis 1,2 % durchgeführt wird.

7. Verfahren zum Herstellen eines galvanisierten Stahlblechs aus einer Zink-Nickel-Legierung nach Anspruch 3, wobei die Härte der Zink-Nickel-Galvanisierungsschicht, die auf dem Basisstahlblech gebildet ist, 250 bis 400 Hv beträgt.

8. Verfahren zum Herstellen eines galvanisierten Stahlblechs aus einer Zink-Nickel-Legierung nach Anspruch 3, wobei eine Änderung der Oberflächenrauheit Rₐ der Zink-Nickel-Galvanisierungsschicht nach dem Polieren und der Haarlinienmusterbearbeitung -1,00 bis - 0,35 µm beträgt.

9. Verfahren zum Herstellen eines galvanisierten Stahlblechs aus einer Zink-Nickel-Legierung nach Anspruch 3, wobei eine Änderungsrate der Oberflächenrauheit Rₐ der Zink-Nickel-Galvanisierungsschicht nach dem Polieren 60 bis 85 % beträgt und eine Änderungsrate der Oberflächenrauheit der Zink-Nickel-Galvanisierungsschicht nach der Haarlinienmusterbearbeitung 15 bis 40 % beträgt.

10. Verfahren zum Herstellen eines galvanisierten Stahlblechs aus einer Zink-Nickel-Legierung nach Anspruch 3, wobei eine Dicke der Galvanisierungsschicht nach dem Polieren und der Haarlinienmusterbearbeitung 0,2 bis 0,75 der Dicke der Galvanisierungsschicht vor dem Polieren und der Haarlinienmusterbearbeitung beträgt.

## Revendications

1. Tôle d'acier électroplaquée en alliage zinc-nickel, comprenant :
une tôle d'acier de base ; et
une couche de placage zinc-nickel située sur au moins une surface de la tôle d'acier de base, et ayant un motif de lignage formé sur celle-ci,
dans laquelle une rugosité de surface Rₐ de la tôle d'acier de base formant une interface avec la couche de placage zinc-nickel est de 0,7 à 1,0 µm sur la base d'une rugosité moyenne de ligne centrale,
dans laquelle la couche de placage zinc-nickel est composée d'une seule phase gamma, qui est Ni₅Zn₂₁.

2. Tôle d'acier électroplaquée en alliage zinc-nickel selon la revendication 1, dans laquelle une dureté de la couche de placage zinc-nickel est de 250 à 400 Hv.

3. Procédé de fabrication d'une tôle d'acier électroplaquée en alliage zinc-nickel, comprenant les opérations de :
laminage d'écrouissage d'une tôle d'acier de base ;
immersion de la tôle d'acier de base ayant subi un laminage d'écrouissage dans un bain d'acide sulfurique incluant du sulfate de nickel hexahydraté et du sulfate de zinc heptahydraté pour former une couche de placage zinc-nickel sur la tôle d'acier de base ; et
polissage de la couche de placage zinc-nickel et traitement d'un motif de lignage,
dans lequel une rugosité de surface Rₐ de la tôle d'acier de base ayant subi un laminage d'écrouissage est de 0,7 à 1,0 µm sur la base de la rugosité moyenne de ligne centrale, dans lequel la couche de plaquage zinc-nickel est composée d'une seule phase gamma, qui est Ni₅Zn₂₁.

4. Procédé de fabrication d'une tôle d'acier électroplaquée en alliage zinc-nickel selon la revendication 3, dans lequel l'opération de laminage d'écrouissage est réalisée à l'aide d'un rouleau texturé à décharge électrique dans un mode de capacité (-).

5. Procédé de fabrication d'une tôle d'acier électroplaquée en alliage zinc-nickel selon la revendication 4, dans lequel une surface du rouleau est revêtue de chrome.

6. Procédé de fabrication d'une tôle d'acier électroplaquée en alliage zinc-nickel selon la revendication 3, dans lequel l'opération de laminage d'écrouissage est réalisée à un allongement de 0,3 à 1,2 %.

7. Procédé de fabrication d'une tôle d'acier électroplaquée en alliage zinc-nickel selon la revendication 3, dans lequel une dureté de la couche de placage zinc-nickel formée sur la tôle d'acier de base est de 250 à 400 Hv.

8. Procédé de fabrication d'une tôle d'acier électroplaquée en alliage zinc-nickel selon la revendication 3, dans lequel un changement de rugosité de surface Ra de la couche de placage zinc-nickel après le polissage et le traitement de motif de lignage est de - 1,00 à -0,35 µm.

9. Procédé de fabrication d'une tôle d'acier électroplaquée en alliage zinc-nickel selon la revendication 3, dans lequel un taux de changement de la rugosité de surface Ra de la couche de placage zinc-nickel après le polissage est de 60 à 85 %, et un taux de changement de la rugosité de surface du placage zinc-nickel après le traitement de motif de lignage est de 15 à 40 %.

10. Procédé de fabrication d'une tôle d'acier électroplaquée en alliage zinc-nickel selon la revendication 3, dans lequel une épaisseur de la couche de placage après le polissage et le traitement de motif de lignage représente 0,2 à 0,75 de l'épaisseur de la couche de placage avant le polissage et le traitement de motif de lignage.
